# EUROPÄISCHE PATENTSCHRIFT

(11) **EP 0 366 157 B1**
(45) Veröffentlichungstag und Bekanntmachung des Hinweises auf die Patenterteilung: **09.07.1997**
(21) Anmeldenummer: 89121194.8
(22) Anmeldetag: 14.12.1987
(51) Int. Cl.: C08L 63/00, C08L 67/00

(54) **Epoxidharze enthaltend Polyester auf Polyalkylenglykolbasis und bei höheren Temperaturen wirksame Härter**
Epoxy resins containing a polyester based on a polyalkylene glycol and curing agents active at higher temperatures
Résines époxydes contenant un polyester à base d'un polyalcoylène glycol et un durcisseur actif à des températures élevées

(30) Priorität: 19.12.1986 CH 5097/86
(43) Veröffentlichungstag der Anmeldung: 02.05.1990
(62) Teilanmeldung aus: 87810754.9
(73) Patentinhaber: Ciba Specialty Chemicals Holding Inc., 4057 Basel (CH); CIBA-GEIGY GmbH, 79662 Wehr/Baden (DE)
(72) Erfinder: Mülhaupt, Rolf, Prof. Dr., CH-1723 Marly (CH); Möckel-Weber, Julia, Dr., D-7860 Schopfheim/Baden (DE)

(56) Entgegenhaltungen:
- GB-A- 2 075 021
- GB-A- 2 078 751
- US-A- 3 316 277

## Beschreibung

Die vorliegende Erfindung betrifft eine Epoxidmischung enthaltend Diester auf Polyalkylenoxidbasis und bei höheren Temperaturen wirksame Härter, sowie die Verwendung der Diester als Flexibilisatoren für Epoxidharze.

Gehärtete Epoxidharze sind im allgemeinen sehr spröde Materialien, die sehr geringe Biegefestigkeiten und Schlagzähigkeiten aufweisen. Um dieser Versprödung entgegenzuwirken, setzt man dem Epoxidharz epoxidterminierte elastische Präpolymere, wie z.B. Epoxidaddukte von carboxyl- oder aminoterminierten Butadien/Acrylnitril Copolymeren, als Flexibilisatoren zu. Dabei ist zu beachten, dass durch solche Zusätze oft eine starke Zunahme der Viskositäten der Epoxidharzmischungen eintritt, was die Verarbeitung erschwert. Polyester wurden ebenfalls als flexibilisierende Zusätze vorgeschlagen, doch beobachtet man in diesen Fällen oft Hydrolyseinstabilität, erhöhte Wasseraufnahme und starke Abnahmen der Zugscherfestigkeiten nach Lagerung in feucht-heissem korrosionsförderndem Klima.

In der DE-AS 1,816,096 werden Diglycidylester von carboxyl-terminierten Polyestern auf der Basis von aromatischen Dicarbonsäuren und Polyalkylenglykolen beschrieben. Die Epoxidharze können, je nach Harz- und/oder Härtertyp, zu stark oder schwach flexiblen oder zu gummielastischen Körpern verarbeitet werden. Die Wasseraufnahme der gehärteten Produkte lässt noch Wünsche offen; ferner beobachtet man in der Regel Festigkeitsverluste bei der Wasserlagerung.

Solche Nachteile treten auch bei anderen Epoxidmischungen auf, die Polyester als Flexibilisatoren enthalten.
Im US-Patent 3,397,254 werden carboxyl-terminierte Polyester beschrieben, die als Epoxidhärter eingesetzt werden können. Diese Polyester leiten sich von cyclischen Dicarbonsäuren ab. Als Alkoholkomponente verwendet man unter anderem Alkylenglykole, darunter auch Dipropylenglykol oder Triethylenglykol.
Nach den Ausführungsbeispielen werden bevorzugt Propylenglykol oder Diethylenglykyol als Alkoholkomponenten eingesetzt. Die daraus resultierenden Polyester besitzen im Vergleich zu den Typen mit längeren Polyalkylenglykoleinheiten eine erhöhte Wasseraufnahme und geringere flexibilisierende Wirkung.

Im US-Patent 3,576,903 werden Addukte aus einem Epoxidharz und einem carboxyl-terminierten Polyester oder Polyamid beschrieben. Die Verbindungen lassen sich in Kombination mit einem Härter zu flexiblen und rasch härtbaren Beschichtungen verarbeiten.

Schliesslich sind aus der JP-OS 53-40,100 Polyester aus aliphatischen Diolen, alicyclischen und aliphatischen Dicarbonsäuren bekannt, die sich als Addukte an ein Epoxidharz als Epoxidhärter einsetzen lassen und Produkte mit guter Flexibilität ergeben.

Im US Patent 3,280,077 werden carboxyl-terminierte Polyester aus cyclischen Dicarbonsäuren, einem zwei- oder mehrwertigen Polyol und einer Alkylenoxidkomponente beschrieben. Die Polyester eignen sich als Ersatzstoffe für Epoxidharze. Harzformulierungen mit einem Epoxidgehalt von weniger als 50 Gew.% werden hergestellt, die jedoch nur kurze Polyalkylenoxidsegmentlängen aufweisen.

Aus dem US-Patent 3,299,008 sind Polyester bekannt, die sich von Polyolen, unter anderem von Polyalkylenglykolen, und cyclischen Carbonsäureanhydriden ableiten. Bevorzugt verwendet man cyclische Anhydride aliphatischer Carbonsäuren oder cycloaliphatische Carbonsäureanhydride mit weniger als 20 C-Atomen. Die Verbindungen werden als Epoxidflexibilisatoren eingesetzt.

Um die Hydrolysebeständigkeit zu erhöhen, werden im US-Patent 3,723,569 Epoxidharzmischungen enthaltend zusätzlich einen Blockcopolyester, der aus Segmenten enthaltend kurzkettige Diolreste bzw. langkettige Polyalkylenoxidreste besteht, vorgeschlagen.
Die Copolyester verleihen den Mischungen ausgezeichnete Hydrolysebeständigkeit und eine Kombination von guter Festigkeit und guten Tieftemperatureigenschaften. Diese Copolyester sind teilkristallin; sie weisen also Bezirke mit hohen intermolekularen Wechselwirkungen auf. Beim Einmischen solcher Copolyester in Epoxidharze können daher Löslichkeitsprobleme auftreten; ausserdem sind die Copolyester-Epoxidharzmischungen relativ hoch viskos, so dass bei deren Verarbeitung Probleme auftreten können.

Polyester auf Basis von Dimerfettsäuren und Polybutylenoxid sind aus der EP-A 30,904 bekannt. Die Verbindungen werden als Zwischenprodukte bei der Herstellung von Polyesteramiden verwendet.

Schliesslich werden im US-A-3316277 aromatische Epoxyester vorgeschlagen, welche durch Reaktion eines Epihalohydrins mit einem organischen Polykondensationsprodukt enthaltend im Molekül mindestens eine aromatische Hydroxycarbonsäure gewonnen werden und in Gegenwart von Härtern gehärtet werden können.

Es wurde jetzt eine ausgewählte Klasse von Diesterflexibilisatoren gefunden, die neben niedrigen Viskositäten eine Kombination von hoher Festigkeit mit guter Flexibilisierung auch bei tiefen Temperaturen sowie eine gute Beständigkeit in korrosiver Umgebung ergeben. Ausserdem wurden phenol-terminierte flexible Diester auf Polyalkylenoxidbasis gefunden, die sich als reaktive flexibilisierende Reaktiv-Verdünner eignen und in der Regel keine Voradduktbildung mit dem Epoxidharz erfordern.

Die vorliegende Erfindung betrifft eine Zusammensetzung enthaltend
a) mindestens ein aliphatisches, cycloaliphatisches, aromatisches, araliphatisches oder heterocyclisches Epoxidharz mit mindestens einer 1,2-Epoxidgruppe im Molekül,
b) mindestens eine Verbindung der Formel I 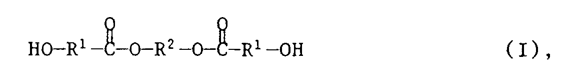 worin R¹ einen zweiwertigen Rest einer aromatischen Hydroxycarbonsäure nach dem Entfernen der Carboxylgruppe und der phenolischen Hydroxylgruppe darstellt und R² der Rest eines aliphatischen oder cycloali phatischen Diols nach dem Entfernen der beiden Hydroxylgruppen ist, und
c) einen bei höheren Temperaturen zwischen 80 und 250°C wirksamen Härter für Komponente a), mit der Massgabe, dass mindestens 70 Gew.% der Reste R², bezogen auf die Gesamtmenge dieser Reste, Gruppen der Formel II sind 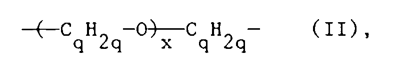 worin x eine ganze Zahl von 5 bis 40 ist und q 3 oder 4 bedeutet oder bis zu 30 Gew.% innerhalb eines Restes der Formel II auch Gruppen mit q = 2 sein können, und dass die Reste R¹ und R² und die Indizes x und q in einem Molekül innerhalb der gegebenen Definitionen unterschiedlich sein können.

Als Komponente a) der Zusammensetzungen dieser Erfindung eignen sich alle aliphatischen, cycloaliphatischen, aromatischen, araliphatischen oder heterocyclischen Epoxidharze. Man kann auch Gemische dieser Harze einsetzen.

Bevorzugte Epoxidharze enthalten wenigstens zwei Reste der Formel VI 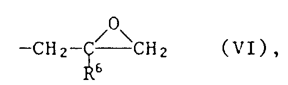 wobei diese Reste direkt an Sauerstoff-, Stickstoff- oder Schwefelatome gebunden sind, worin R⁶ Wasserstoff oder Methyl ist.

Beispielhaft für Epoxidharze dieses Typs wären zu erwähnen:
I) Polyglycidyl- und Poly-(β-methylglycidyl)-ester erhältlich durch Umsetzung einer Verbindung mit mindestens zwei Carboxylgruppen im Molekül und Epichlorhydrin bzw. β-Methyl-epichlorhydrin. Die Umsetzung erfolgt zweckmässig in der Gegenwart von Basen.
   Als Verbindung mit mindestens zwei Carboxylgruppen im Molekül können aliphatische Polycarbonsäuren verwendet werden. Beispiele für diese Polycarbonsäuren sind Oxalsäure, Bernsteinsäure, Glutarsäure, Adipinsäure, Pimelinsäure, Korksäure, Azelainsäure, Sebazinsäure oder dimerisierte bzw. trimerisierte Linolsäure.
   Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.
   Weiterhin können aromatische Polycarbonsäuren Verwendung finden, wie beispielsweise Phthalsäure, Isophthalsäure oder Terephthalsäure.
II) Polyglycidyl- oder Poly(β-methylglycidyl)-ether erhältlich durch Umsetzung einer Verbindung mit mindestens zwei freien alkoholischen Hydroxygruppen und/oder phenolischen Hydroxygruppen und einem geeignet substituierten Epichlorhydrin unter alkalischen Bedingungen, oder in Anwesenheit eines sauren Katalysators und anschliessender Alkalibehandlung; oder erhältlich durch Vorverlängerung einer Bis-Epoxidverbindung mit einem Bisphenol in an sich bekannter Weise.
   Solche Ether leiten sich beispielsweise ab von acyclischen Alkoholen, wie Ethylenglykol, Diethylenglykol und höheren Poly-(oxyethylen)-glykolen, Propan-1,2-diol oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Pentaerythrit, Sorbit, sowie von Polyepichlorhydrinen.
   Sie leiten sich aber auch beispielsweise ab von cycloaliphatischen Alkoholen wie 1,3- oder 1,4-Dihydroxycyclohexan, Bis-(4-hydroxycyclohexyl)-methan, 2,2-Bis(4-hydroxycyclohexyl)-propan oder 1,1-Bis-(hydroxymethyl)-cyclohex-3-en oder sie besitzen aromatische Kerne wie N,N-Bis-(2-hydroxyethyl)-anilin oder p,p'-Bis-(2-hydroxyethylamino)-diphenyl-methan.
   Die Epoxidverbindungen können sich auch von einkernigen Phenolen ableiten, wie beispielsweise von Resorcin oder Hydrochinon; oder sie basieren auf mehrkernigen Phenolen wie beispielsweise auf Bis-(4-hydroxyphenyl)-methan, 4,4'-Dihydroxydiphenyl, Bis-(4-hydroxyphenyl)-sulfon, 1,1,2,2-Tetrakis-(4-hydroxyphenyl)-ethan, 2,2-Bis-(4-hydroxyphenyl)-propan, 2,2-Bis-(3,5-dibrom-4-hydroxyphenyl)-propan sowie auf Novolaken erhältlich durch Kondensation von Aldehyden, wie beispielsweise Formaldehyd, Acetaldehyd, Chloral oder Furfuraldehyd mit Phenolen wie Phenol, oder mit Phenolen, die im Kern mit Chloratomen oder C₁-C₉Alkylgruppen substituiert sind, wie beispielsweise 4-Chlorphenol, 2-Methylphenol oder 4-tert.Butylphenol oder erhältlich durch Kondensation mit Bisphenolen, so wie oben beschrieben.
   Die Epoxidverbindungen können sich aber auch von der Umsetzung von Diglycidylethern zweiwertiger Phenole, beispielsweise von 2,2-Bis-(4-hydroxyphenyl)-propan, mit zweiwertigen Phenolen, beispielsweise mit 2,2-Bis-(4-hydroxyphenyl)-propan, ableiten.
III) Poly-(N-glycidyl) Verbindungen sind beispielsweise erhältlich durch Dehydrochlorierung der Reaktionsprodukte von Epichlorhydrin mit Aminen, die mindestens zwei Aminowasserstoffatome enthalten. Bei diesen Aminen handelt es sich zum Beispiel um Anilin, n-Butylamin, Bis-(4-aminophenyl)-methan, m-Xylylendiamin oder Bis-(4-methylaminophenyl)-methan.
   Zu den Poly-(N-glycidyl) Verbindungen zählen aber auch Triglycidylisocyanurat, N,N'-Diglycidylderivate von Cycloalkylenharnstoffen, wie Ethylenharnstoff oder 1,3-Propylenharnstoff, und N,N'-Diglycidylderivate von Hydantoinen, wie von 5,5-Dimethylhydantoin.
IV) Beispiele für Poly-(S-glycidyl) Verbindungen sind Di-S-glycidylderivate, die sich von Dithiolen, wie beispielsweise Ethan-1,2-dithiol oder Bis-(4-merkaptomethylphenyl)-ether ableiten.

Es lassen sich aber auch Epoxidharze verwenden, bei denen die 1,2-Epoxidgruppen an unterschiedliche Heteroatome bzw. funktionelle Gruppen gebunden sind; zu diesen Verbindungen zählen beispielsweise das N,N,O-Triglycidylderivat des 4-Aminophenols, der Glycidylether-glycidylester der Salicylsäure, N-Glycidyl-N'-(2-glydidyloxypropyl)-5,5-dimethylhydantoin oder 2-Glycidyloxy-1,3-bis-(5,5-dimethyl-1-glycidylhydantoin-3-yl)-propan.

Ebenfalls in Betracht kommen Epoxidharze, in denen einige oder sämtliche Epoxidgruppen mittelständig sind, wie Vinylcyclohexendioxyd, Limonendioxyd, Dicyclopentadiendioxyd, Bis-(2,3-epoxicyclopentyl)-ether, 2,3-Epoxicyclopentylglycidylether, 4-Oxatetracyclo[6.2.1.0^{2,7}.O.^{3,5}]undec-9-ylglycidylether, 1,2-Bis-(4-oxatetracyclo[6.2.1.0^{2,7}.O.^{3,5}]undec9-yloxy)ethan, der 3,4-Epoxicyclohexylmethylester der 3',4'-Epoxicyclohexancarbonsäure sowie dessen 6,6'-Dimethylderivat, der Bis-(3,4-epoxicyclohexancarbonsäureester) des Ethylenglykols, der Bis-adipinsäureester des 3,4-Epoxi-6-methylcyclohexanmethylols oder 3-(3,4-Epoxicyclohexyl)-8,9-epoxi-2,4-dioxaspiro[5.5]undecan.

Besonders bevorzugt als Epoxidharze werden Polyglycidylether von Bisphenolen, wie beispielsweise von 2,2-Bis-(4-hydroxyphenyl)-propan oder Bis-(hydroxyphenyl)-methan (Isomerengemisch) oder insbesondere die vorverlängerten Typen auf Basis von 2,2-Bis-(4-hydroxyphenyl)-propandiglycidylether mit 2,2-Bis-(4-hydroxyphenyl)-propan, von Novolaken, die durch Umsetzung von Formaldehyd mit einem Phenol gebildet werden, oder von den oben erwähnten aliphatischen Polyolen, insbesondere von Butan-1,4-diol oder Pentaerithrit. Ebenfalls bevorzugt als Epoxidharze werden die Diglycidylester der oben erwähnten Dicarbonsäuren.

Der R¹ zugrundeliegende Rest einer aromatischen Hydroxycarbonsäure leitet sich beispielsweise von einer Hydroxybenzolmonocarbonsäure ab. Es kann sich aber auch um höher kondensierte Derivate handeln, beispielsweise kann man auch Monocarbonsäuren von α- oder β-Naphthol verwenden.

Beispiele für bevorzugte Reste R¹ sind 1,2-, 1,3- oder 1,4-Phenylen. Bevorzugt ist R⁵ ein 1,2- oder 1,4-Phenylenrest, insbesondere jedoch ein 1,4-Phenylenrest.

Die Reste der Formel II leiten sich von Polyalkylenoxiden mit C₃-C₄-Alkylenoxideinheiten ab. Die Segmente müssen eine gewisse Mindestlänge besitzen (x = 5), um dem Polyester eine ausreichende Flexibilität zu verleihen. Die Reste der Formel II leiten sich bevorzugt von Propylenoxid und besonders bevorzugt von Butylenoxid ab. Es handelt sich dabei also um Strukturelemente der Formeln -(O-CH(CH₃)-CH₂)ₓ₊₁- oder -(O-CH₂-CH₂-CH₂-CH₂)ₓ₊₁- (x = 5-40).

Die Strukturelemente der Formel II können auch als Mischungen innerhalb eines Diestermoleküls vorliegen. Selbstverständlich kann man auch Copolyethersegmente der Formel II verwenden, also Reste der Formel II worin der Index q innerhalb eines Restes unterschiedliche Bedeutungen besitzt. Bei dieser Ausführungsform können auch bis zu 30 Gew.% Ethylenglykoleinheiten (q = 2) einkondensiert sein.

Bevorzugt setzt man auch Gemische aus Propylenoxid- und Butylenoxideinheiten (Gemische innerhalb eines Polyestermoleküls oder Copolyether) ein. Das bevorzugte Gewichtsverhältnis von Propylenoxid- zu Butylenoxideinheiten beträgt bei dieser Ausführungsform 1:9 bis 9:1.

Neben den Resten der Formel II können als Cokomponenten noch bis zu 30 Gew.% anderer aliphatischer Diolreste vorliegen. Dabei handelt es sich in der Regel um geradkettige oder verzweigte C₂-C₁₂Alkylenreste. Beispiele für die zugrundeliegenden Diole sind Ethylenglykol, Propylenglykol, Butylenglykol, Neopentylglykol, 1,6-Hexandiol, 1,8-Octoandiol, 1,10-Decandiol oder 1,12 Dodecandiol.

Neben den Resten der Formel II können als Cokomponenten noch bis zu 30 Gew.% anderer cycloaliphatischer Diolreste vorliegen. Dabei handelt es sich in der Regel um monocyclische Diolreste, die sich beispielsweise von 1,3- oder 1,4-Cyclohexandiol oder 1,4-Cyclohexandimethanol ableiten.

Die Diester der Formel I zeichnen sich in der Regel durch eine besonders niedrige Viskosität aus, was die Verarbeitung der erfindungsgemässen Zusammensetzung sehr erleichtert.

Die Diester der Formel I besitzen in der Regel Erweichungspunkte von weniger als 30°C und sind vorzugsweise bei 25°C flüssig. Sie lassen sich also ohne Schwierigkeiten in die betreffenden Epoxidharze einarbeiten und ergeben dann Mischungen mit einer relativ niedrigen Viskosität.

Die Diester besitzen vorzugsweise eine Viskosität von weniger als 80'000, insbesondere weniger als 30'000 mPas (gemessen bei 25°C mit dem Epprecht-Viskosimeter).

Die flexibilisierende Wirkung der Diester der Formel I wird in starkem Masse durch die Zahl der reaktiven Endgruppen und die Art der flexibilisierenden Polyalkylenglykolsegmente bestimmt.

Die phenol-terminierten Diester weisen bevorzugt eine phenolische OH-Zahl von 0,5-4,5 mAequ./g auf.

Bevorzugt werden Zusammensetzungen, wie oben definiert, mit Viskositäten von weniger als 50'000 mPas, besonders von weniger als 20'000 mPas und ganz besonders von weniger als 15'000 mPas (gemessen bei 25°C mit dem Epprecht-Viskosimeter).

Der Index x bestimmt die Länge der Polyoxyalkylenkette; x ist vorzugsweise eine ganze Zahl von 8 bis 40 und ganz besonders bevorzugt eine ganze Zahl von 10 bis 30. Das Molekulargewicht (Zahlenmittel) der Polypropylenglykol- bzw. der Polybutylenglykoleinheiten liegt vorzugsweise zwischen 600 und 2500.

Der Index q bestimmt die Länge des Alkylenrestes in der Polyalkylenglykolgruppe; q ist bevorzugt 4.

Die Herstellung der Diester der Formel I erfolgt in an sich bekannter Weise durch Polykondensation von einem molaren Anteil Diol mit zwei molaren Anteilen Hydroxycarbonsäure.

Anstelle der Hydroxycarbonsäure kann man auch die entsprechende polyesterbildenden Carbonsäurederivate, beispielsweise die Ester oder die Säurechloride, einsetzen.

Die Ausgangsprodukte sind allgemein bekannt und teilweise im Handel erhältlich.

Die Diesterharze können durch allgemeine Arbeitsweisen, die bei der Herstellung solcher Harze Anwendung finden, hergestellt werden. So kann man zweckmässigerweise die Veresterung durch Schmelzkondensation der Carbonsäurekomponente(n) und des Diols durchführen. Die Reaktionsteilnehmer werden dabei beispielsweise unter Rühren bis zu einer Temperatur von 240°C erhitzt. Dabei kann es sich anbieten, ein inertes Gas, wie beispielsweise Stickstoff, durch die Reaktionsmischung zu leiten, um das während der Veresterungsreaktion gebildete Wasser oder den niedrigen Alkohol, wenn ein Ester als funktionalisiertes Carbonsäurederivat eingesetzt wurde, zu entfernen. Auch kann am Ende der Veresterungsreaktion gegebenenfalls ein leichtes Vakuum angelegt werden, um restliche niedermolekulare Spaltprodukte zu isolieren. Der bevorzugte Temperaturbereich der Schmelzkondensation beträgt 160-200°C. Man kann aber auch andere Formen der Polykondensation anwenden, beispielsweise die Grenzflächenpolykondensation, die Polykondensation in Lösung, in Suspension oder in Masse.

Die Epoxidmischungen enthaltend die Diester der Formel I können auch in Form von Addukten eingesetzt werden. Dazu wird der betreffende Polyester in an sich bekannter Weise zusammen mit dem Epoxidharz und gegebenenfalls einem geeigneten Katalysator erhitzt, so dass ein schmelzbares aber noch härtbares Vorkondensat entsteht. Als Katalysator verwendet man beispielsweise Triphenylphosphin, tertiäre Amine, quaternäre Ammoniumsalze und ganz besonders bevorzugt Chrom-Acetylacetonat.

Die Mengen der Diester- und der Epoxidkomponente wählt man in der Regel so, dass auf eine freie phenolische Hydroxylgruppe des Polyesters mindestens zwei 1,2-Epoxidgruppen des Epoxidharzes entfallen. Die Menge an Katalysator beträgt in der Regel 0,1-5,0 Gew. %, bezogen auf die Gesamtmischung.

In der Regel wird die Viskosität des Adduktes grösser sein, als die Viskosität der Einzelkomponenten. Man beobachtet jedoch auch Fälle, in denen die Viskosität des Adduktes geringer ist als die Viskosität der Einzelkomponente mit dem grössten Wert; dies ist in der Regel der Polyester.

Bei den phenol-terminierten Diestern der Formel I kann die Adduktbildung in der Regel entfallen, da diese Epoxidmischungen im allgemeinen eine befriedigende Lagerstabilität besitzen. Man kann selbstverständlich auch aus Epoxiden und Diestern der Formel I Addukte herstellen.

Die Erfindung betrifft auch ein schmelzbares aber noch härtbares Vorkondensat erhältlich durch Erhitzen der Zusammensetzung, wie oben definiert, in an sich bekannter Weise.

Die Mengen des Epoxidharzes a) und des Diesters b) der erfindungsgemässen Zusammensetzungen werden vorzugsweise so gewählt, dass das Verhältnis der Hydroxyläquivalente des Diesters b) zu den Epoxidäquivalenten des Epoxidharzes a) zwischen 0,05 und 1,0, vorzugsweise 0,1 und 0,8, liegt.
Ganz besonders bevorzugt werden Zusammensetzungen enthaltend 1-50 Gew.%, besonders 5-25 Gew.%, Diester der Formel I, II, III oder IV, bezogen auf die Gesamtmischung.

Die erfindungsgemässen härtbaren Zusammensetzungen enthalten auch noch zusätzliche dem Fachmann bekannte bei höheren Temperaturen wirksame Härter c), wie z.B. aromatische Amine, wie Bis-(4-aminophenyl)-methan, Anilin-Formaldehyd-Harze und Bis-(4-aminophenyl)-sulfon; Polyaminoamide, wie beispielsweise solche aus aliphatischen Polyaminen und dimerisierten oder trimerisierten Fettsäuren; Polyphenole, wie Resorcin, Hydrochinon, 2,2-Bis(4-hydroxyhenyl)propan (Bisphenol A) und Phenol-Aldehyd-Harze; Polycarbonsäuren und ihre Anhydride, wie z.B. Phthalsäureanhydrid, Tetrahydrophthalsäureanhydrid, Hexahydrophthalsäureanhydrid, Hexachlorendomethylentetrahydrophthalsäureanhydrid, Pyromellitsäuredianhydrid, Benzophenon 3,3',4,4'-tetracarbonsäuredianhydrid, die Säuren der zuvorgenannten Anhydride sowie auch Isophthalsäure und Terephthalsäure. Es können auch katalytisch wirkende Härtungsmittel verwendet werden, wie beispielsweise tertiäre Amine [z.B. 2,4,6-Tris-(dimethylaminoethyl)-phenol]; Imidazole oder Mannichbasen; Alkalimetallalkoholate (z.B. Na-Alkoholat von 2,4-Dihydroxy-3-hydroxymethylpentan); Zinnsalze von Alkansäuren (z.B. Zinnoctanoat); Friedel-Crafts-Katalysatoren, wie Bortrifluorid und Bortrichlorid und ihre Komplexe und Chelate, die durch Umsetzung von Bortrifluorid mit z.B. 1,3-Diketonen erhalten werden; sowie substituierte Cyanamide, wie Dicyandiamid; oder substituierte Harnstoffe mit aromatischen Resten, wie N-(4-Chlorphenyl)-N,N'-dimethylharnstoff, N-(2-Hydroxyphenyl)-N,N'-dimethylharnstoff, N-(3-Chlor-4-methylphenyl)-N,N'-dimethylharnstoff (Chlortoluron) oder 2,4-Bis-(N,N'-dimethylureido)-toluol.

Die Härtung wird bei höheren Temperaturen vorgenommen. Die Härtungstemperaturen liegen zwischen 80 und 250°C, bevorzugt zwischen 100 und 180°C. Die Härtung kann gewünschtenfalls auch in zwei Stufen vorgenommen werden, indem man z.B. den Härtungsvorgang unterbricht oder die härtbare Mischung bei tieferen Temperaturen teilweise härten lässt. Die dabei erhaltenen Produkte sind noch schmelzbare und lösliche Präkondensate (sogenannte "B-Stufenharze") und eignen sich z.B. für Pressmassen, Sinterpulver oder Prepregs.

Gewünschtenfalls kann man den härtbaren Gemischen zur weiteren Herabsetzung der Viskosität reaktive Verdünner, wie z.B. Styroloxid, Butylglycidylether, 2,2,4-Trimethylpentylglycidylether, Phenylglycidylether, Kresylglycidylether oder Glycidylester von synthetischen, hochverzweigten, in der Hauptsache tertiären aliphatischen Monocarbonsäuren, zusetzen. Als weitere übliche Zusätze können die erfindungsgemässen Gemische ferner Weichmacher, Streck-, Füll- und Verstärkungsmittel, wie beispielsweise Steinkohlenteer, Bitumen, Textilfasern, Glasfasern, Asbestfasern, Borfasern, Kohlenstoff-Fasern, mineralische Silikate, Glimmer, Quarzmehl, Aluminiumoxidhydrat, Bentonite, Kaolin, Kieselsäureaerogel oder Metallpulver, z.B. Aluminiumpulver oder Eisenpulver, ferner Pigmente und Farbstoffe, wie Russ, Oxidfarben und Titandioxid, Flammschutzmittel, Thixotropiemittel, Verlaufmittel ("flow control agents"), wie Silicone, Wachse und Stearate, die zum Teil auch als Formtrennmittel Anwendung finden, Haftvermittler, Antioxidantien und Lichtschutzmittel enthalten.

Die erfindungsgemässen Gemische finden z.B. Anwendung als Klebstoffe oder zur Herstellung von gehärteten Produkten, wie Verbundwerkstoffen und Laminaten. Sie können in jeweils dem speziellen Anwendungsgebiet angepasster Formulierung, in ungefülltem oder gefülltem Zustand, z.B. als Anstrichmittel, Beschichtungsmassen, Lacke, Pressmassen, Tauchharze, Giessharze, Imprägnierharze, Laminierharze, Matrixharze und Klebemittel verwendet werden.

Die Erfindung betrifft auch die Verwendung der Polyester der Formel I als Flexibilisatoren für Epoxidharze.

Die folgenden Beispiele erläutern die Erfindung näher.

### A) Allgemeine Arbeitsvorschrift für die Diesterherstellung

1 Mol des dihydroxyterminierten Polyalkylenoxids wird mit 2 Mol Hydroxybenzoesäure (oder Hydroxybenzoesäureethylester) 4 Stunden bei 200°C und 1 Stunde bei 200°C/150 mbar verestert.

Die hergestellten Diester und 1:1 (Gewicht) Mischungen dieser Diester mit Diglycidylether auf Bisphenol-A-Basis (BPDG; Epoxidwert:
5,4 Aequ./kg) sind in der folgenden Tabelle zusammengefasst:

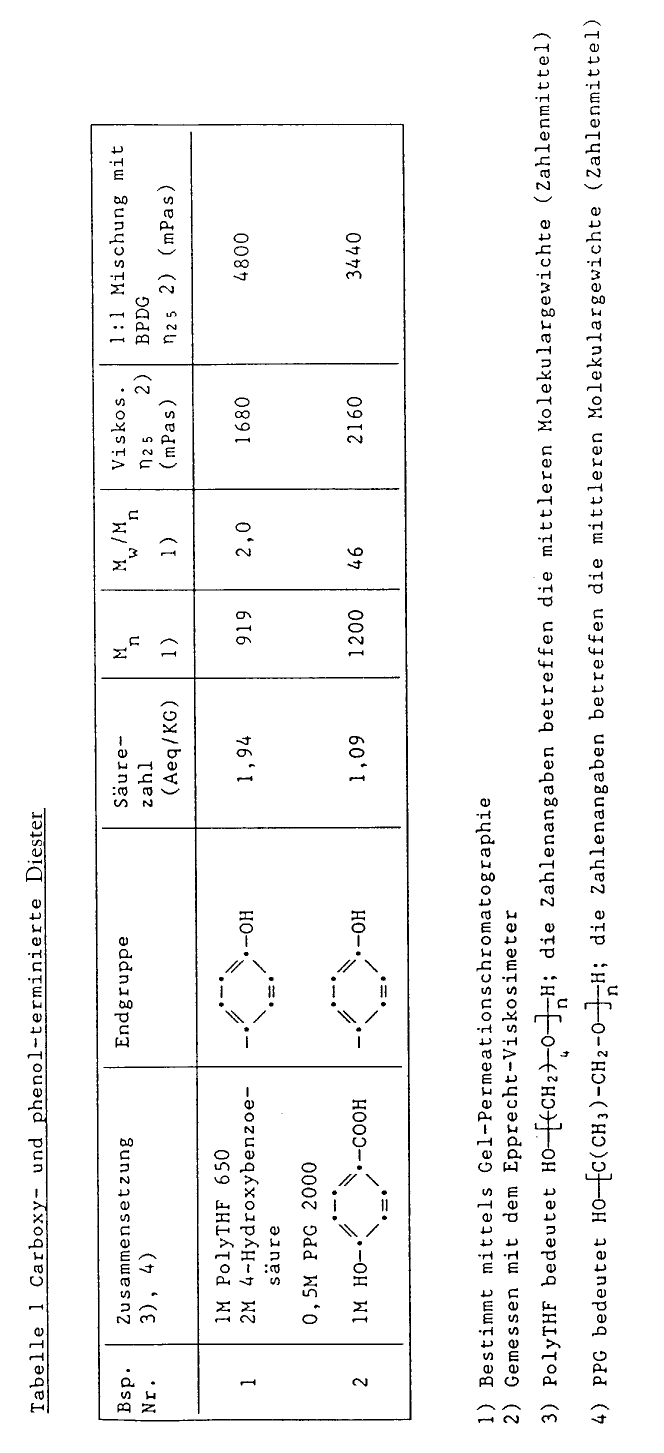

## Patentansprüche (Patentansprüche für folgende(n) Vertragsstaat(en): BE, CH, DE, FR, GB, IT, LI, NL, SE)

1. Zusammensetzung enthaltend
a) mindestens ein aliphatisches, cycloaliphatisches, aromatisches, araliphatisches oder heterocyclisches Epoxidharz mit mindestens einer 1,2-Epoxidgruppe im Molekül,
b) mindestens eine Verbindung der Formel I 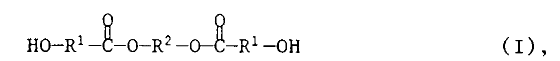 worin
R¹ einen zweiwertigen Rest einer aromatischen Hydroxycarbonsäure nach dem Entfernen der Carboxylgruppe und der phenolischen Hydroxylgruppe darstellt und
R² der Rest eines aliphatischen oder cycloaliphatischen Diols nach dem Entfernen der beiden Hydroxylgruppen ist, und
c) einen bei höheren Temperaturen zwischen 80 und 250°C wirksamen Härter für Komponente a) mit der Massgabe, dass
mindestens 70 Gew.% der Reste R², bezogen auf die Gesamtmenge dieser Reste, Gruppen der Formel II sind 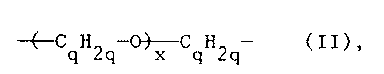 worin x eine ganze Zahl von 5 bis 40 ist und q 3 oder 4 bedeutet oder bis zu 30 Gew.% innerhalb eines Restes der Formel II auch Gruppen mit q = 2 sein können, und dass die Reste R¹ und R² und die Indizes x und q in einem Molekül innerhalb der gegebenen Definitionen unterschiedlich sein können.

2. Zusammensetzung gemäss Anspruch 1, worin Komponente a) ein Polyglycidylether von Bisphenolen, von Novolaken oder von aliphatischen Diolen ist.

3. Zusammensetzung gemäss Anspruch 1 mit einer Viskosität von weniger als 50,000 mPas (gemessen bei 25°C mit dem Epprecht-Viskosimeter).

4. Zusammensetzung gemäss Anspruch 1, worin x eine ganze Zahl von 8 bis 40 ist.

5. Zusammensetzung gemäss Anspruch 1, worin q 4 bedeutet.

6. Zusammensetzung gemäss Anspruch 1, worin alle Reste R² eine Gruppe der Formel 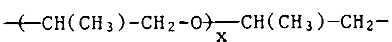 oder 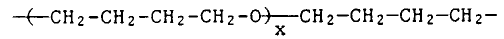 sind und x eine ganze Zahl von 10-30 bedeutet.

7. Zusammensetzung gemäss Anspruch 1 enthaltend 1-50 Gew.%, bezogen auf die Gesamtmischung, Diester der Formel I.

8. Schmelzbares aber noch härtbares Vorkondensat erhältlich durch Erhitzen der Zusammensetzung gemäss Anspruch 1 in an sich bekannter Weise.

9. Verfahren zur Herstellung gehärteter Produkte, dadurch gekennzeichnet, dass man eine Zusammensetzung enthaltend Komponenten a), b) und c) gemäss Anspruch 1 in an sich bekannter Weise härtet.

10. Verwendung der Diester der Formel I gemäss Anspruch 1 als Flexibilisatoren für Epoxidharze.

11. Verwendung der Zusammensetzung gemäss Anspruch 1 als Klebstoff oder zur Herstellung von Verbundwerkstoffen, Laminaten oder Beschichtungen.

## Patentansprüche (Patentansprüche für folgende(n) Vertragsstaat(en): ES)

1. Zusammensetzung enthaltend
a) mindestens ein aliphatisches, cycloaliphatisches, aromatisches, araliphatisches oder heterocyclisches Epoxidharz mit mindestens einer 1,2-Epoxidgruppe im Molekül,
b) mindestens eine Verbindung der Formel I 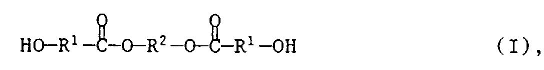 worin
R¹ einen zweiwertigen Rest einer aromatischen Hydroxycarbonsäure nach dem Entfernen der Carboxylgruppe und der phenolischen Hydroxylgruppe darstellt und
R² der Rest eines aliphatischen oder cycloaliphatischen Diols nach dem Entfernen der beiden Hydroxylgruppen ist, und
c) einen bei höheren Temperaturen zwischen 80 und 250°C wirksamen Härter für Komponente a) mit der Massgabe, dass mindestens 70 Gew.% der Reste R², bezogen auf die Gesamtmenge dieser Reste, Gruppen der Formel II sind 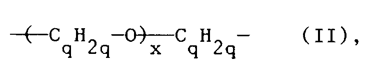 worin x eine ganze Zahl von 5 bis 40 ist und q 3 oder 4 bedeutet oder bis zu 30 Gew.% innerhalb eines Restes der Formel II auch Gruppen mit q = 2 sein können, und dass die Reste R¹ und R² und die Indizes x und q in einem Molekül innerhalb der gegebenen Definitionen unterschiedlich sein können.

2. Zusammensetzung gemäss Anspruch 1, worin Komponente a) ein Polyglycidylether von Bisphenolen, von Novolaken oder von aliphatischen Diolen ist.

3. Zusammensetzung gemäss Anspruch 1 mit einer Viskosität von weniger als 50,000 mPas (gemessen bei 25°C mit dem Epprecht-Viskosimeter).

4. Zusammensetzung gemäss Anspruch 1, worin x eine ganze Zahl von 8 bis 40 ist.

5. Zusammensetzung gemäss Anspruch 1, worin q 4 bedeutet.

6. Zusammensetzung gemäss Anspruch 1, worin alle Reste R² eine Gruppe der Formel 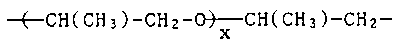 oder 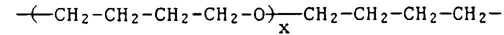 sind und x eine ganze Zahl von 10-30 bedeutet.

7. Zusammensetzung gemäss Anspruch 1 enthaltend 1-50 Gew.%, bezogen auf die Gesamtmischung, Diester der Formel I.

8. Verfahren zur Herstellung gehärteter Produkte, dadurch gekennzeichnet, dass man eine Zusammensetzung enthaltend Komponenten a), b) und c) gemäss Anspruch 1 in an sich bekannter Weise härtet.

9. Verfahren zur Herstellung eines schmelzbaren aber noch härtbaren Vorkondensats, dadurch gekennzeichnet, dass man eine Zusammensetzung gemäss Anspruch 1 in an sich bekannter Weise erhitzt.

10. Verwendung der Diester der Formel I gemäss Anspruch 1 als Flexibilisatoren für Epoxidharze.

11. Verwendung der Zusammensetzung gemäss Anspruch 1 als Klebstoff oder zur Herstellung von Verbundwerkstoffen, Laminaten oder Beschichtungen.

## Claims (Claims for the following Contracting State(s): BE, CH, DE, FR, GB, IT, LI, NL, SE)

1. A composition containing
a) at least one aliphatic, cycloaliphatic, aromatic, araliphatic or heterocyclic epoxy resin having at least one 1,2-epoxide group in the molecule,
b) at least one compound of the formula I 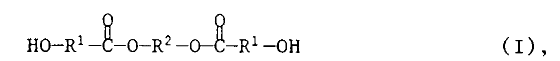 in which R¹ is a divalent radical of an aromatic hydroxycarboxylic acid after the removal of the carboxyl group and of the phenolic hydroxyl group, and R² is the radical of an aliphatic or cycloaliphatic diol after the removal of the two hydroxyl groups, and
c) a curing agent for component a) which is active at elevated temperatures between 80 and 250°C, subject to the proviso that at least 70% by weight of the radicals R², relative to the total amount of these radicals, are groups of the formula II 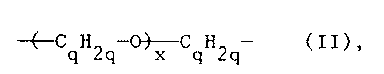 in which x is an integer from 5 to 40 and q is 3 or 4, or up to 30% by weight within a radical of formula II can also be groups in which q = 2, and that the radicals R¹ and R² and the indices x and q in a molecule can be different within the definitions given.

2. A composition according to claim 1, wherein component a) is a polyglycidyl ether of bisphenols, novolaks or aliphatic diols.

3. A composition according to claim 1, having a viscosity less than 50,000 mPas (measured at 25°C using the Epprecht viscometer).

4. A composition according to claim 1, wherein x is an integer from 8 to 40.

5. A composition according to claim 1, wherein q is 4.

6. A composition according to claim 1, wherein all the radicals R² are a group of the formula -(CH(CH₃)-CH₂-O)ₓ-CH(CH₃)-CH₂- or -(CH₂-CH₂-CH₂-CH₂-O)ₓ-CH₂-CH₂-CH₂-CH₂- and x is an integer from 10-30.

7. A composition according to claim 1, containing 1-50% by weight, relative to the total mixture, of diesters of the formula I.

8. A meltable, but still curable, precondensate which can be obtained by heating the composition according to claim 1 in a manner known per se.

9. A process for the production of cured products which comprises curing a composition containing components a), b) and c) according to claim 1 in a manner known per se.

10. Use of the diesters of the formula I according to claim 1 as plasticizers for epoxy resins.

11. Use of the composition according to claim 1 as an adhesive or for the production of composite materials, laminates or coatings.

## Claims (Claims for the following Contracting State(s): ES)

1. A composition containing
a) at least one aliphatic, cycloaliphatic, aromatic, araliphatic or heterocyclic epoxy resin having at least one 1,2-epoxide group in the molecule,
b) at least one compound of the formula I 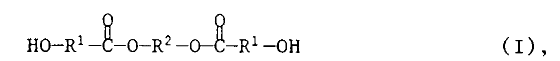 in which R¹ is a divalent radical of an aromatic hydroxycarboxylic acid after the removal of the carboxyl group and of the phenolic hydroxyl group, and R² is the radical of an aliphatic or cycloaliphatic diol after the removal of the two hydroxyl groups, and
c) a curing agent for component a) which is active at elevated temperatures between 80 and 250°C, subject to the proviso that at least 70% by weight of the radicals R², relative to the total amount of these radicals, are groups of the formula II 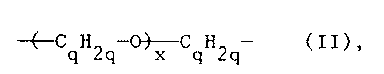 in which x is an integer from 5 to 40 and q is 3 or 4, or up to 30% by weight within a radical of formula II can also be groups in which q = 2, and that the radicals R¹ and R² and the indices x and q in a molecule can be different within the definitions given.

2. A composition according to claim 1, wherein component a) is a polyglycidyl ether of bisphenols, novolaks or aliphatic diols.

3. A composition according to claim 1, having a viscosity less than 50,000 mPas (measured at 25°C using the Epprecht viscometer).

4. A composition according to claim 1, wherein x is an integer from 8 to 40.

5. A composition according to claim 1, wherein q is 4.

6. A composition according to claim 1, wherein all the radicals R² are a group of the formula -(CH(CH₃)-CH₂-O)ₓ-CH(CH₃)-CH₂- or -(CH₂-CH₂-CH₂-CH₂-O)ₓ-CH₂-CH₂-CH₂-CH₂- and x is an integer from 10-30.

7. A composition according to claim 1, containing 1-50% by weight, relative to the total mixture, of diesters of the formula I.

8. A process for the production of cured products which comprises curing a composition containing components a), b) and c) according to claim 1 in a manner known per se.

9. A process for the production of a meltable, but still curable, precondensate which comprises heating a composition according to claim 1 in a manner known per se.

10. Use of the diesters of the formula I according to claim 1 as plasticizers for epoxy resins.

11. Use of the composition according to claim 1 as an adhesive or for the production of composite materials, laminates or coatings

## Revendications (Revendications pour l'(les) Etat(s) contractant(s) suivant(s): BE, CH, DE, FR, GB, IT, LI, NL, SE)

1. Composition contenant :
a) au moins une résine époxyde aliphatique, cyclo-aliphatique, aromatique, araliphatique ou hétérocyclique ayant au moins un groupe 1,2-époxyde dans sa molécule,
b) au moins un composé de formule I 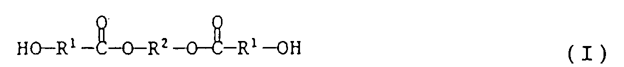 dans laquelle R¹ est un résidu divalent d'un acide hydroxycarboxylique aromatique, après élimination du groupe carboxyle et du groupe hydroxyle phénolique, et R² est le résidu d'un diol aliphatique ou cycloaliphatique, après élimination des deux groupes hydroxyle, et
c) un durcisseur pour le constituant a), actif à de hautes températures comprises entre 80 et 250°C, du moment qu'au moins 70 % en poids des résidus R², par rapport à la quantité totale de ces résidus, sont des groupes de formule II 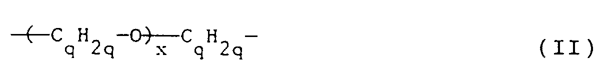 dans laquelle x est un nombre entier de 5 à 40 et q vaut 3 ou 4, ou encore du moment que jusqu'à 30 % en poids, dans un résidu de formule II, peuvent aussi être des groupes dans lesquels q = 2, et que les résidus R¹ et R² et les indices x et q, dans une molécule, peuvent varier à l'intérieur des définitions données.

2. Composition selon la revendication 1, dans laquelle le constituant a) est un éther polyglycidylique de bisphénols, de novolaques ou de diols aliphatiques.

3. Composition selon la revendication 1, ayant une viscosité inférieure à 50 000 mPa.s (mesurée à 25°C avec le viscosimètre Epprecht).

4. Composition selon la revendication 1, dans laquelle x est un nombre entier de 8 à 40.

5. Composition selon la revendication 1, dans laquelle q vaut 4.

6. Composition selon la revendication 1, dans laquelle tous les radicaux R² sont des qroupes de formule 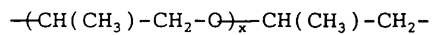 ou 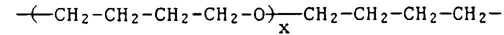 et x est un nombre entier de 10 à 30.

7. Composition selon la revendication 1, contenant de 1 à 50 % en poids, par rapport au mélange total, de diesters de formule I.

8. Précondensat fusible mais encore durcissable pouvant être obtenu par chauffage, d'une manière connue en soi, de la composition selon l'Exemple 1.

9. Procédé pour préparer des produits durcis, caractérisé en ce qu'on durcit d'une manière connue en soi une composition contenant les constituants a), b) et c) selon la revendication 1.

10. Utilisation des diesters de formule I selon la revendication 1 en tant que flexibilisants pour résines époxydes.

11. Utilisation de la composition selon la revendication 1 en tant qu'adhésif ou pour préparer des matériaux composites, des stratifiés ou des revêtements.

## Revendications (Revendications pour l'(les) Etat(s) contractant(s) suivant(s): ES)

1. Composition contenant :
a) au moins une résine époxyde aliphatique, cyclo-aliphatique, aromatique, araliphatique ou hétérocyclique ayant au moins un groupe 1,2-époxyde dans sa molécule,
b) au moins un composé de formule I 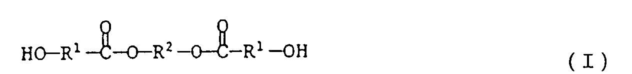 dans laquelle R¹ est un résidu divalent d'un acide hydroxycarboxylique aromatique, après élimination du groupe carboxyle et du groupe hydroxyle phénolique, et R² est le résidu d'un diol aliphatique ou cycloaliphatique, après élimination des deux groupes hydroxyle, et
c) un durcisseur pour le constituant a), actif à de hautes températures comprises entre 80 et 250°C, du moment qu'au moins 70 % en poids des résidus R², par rapport à la quantité totale de ces résidus, sont des groupes de formule II 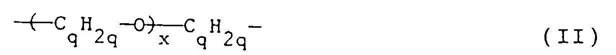 dans laquelle x est un nombre entier de 5 à 40 et q vaut 3 ou 4, ou encore du moment que jusqu'à 30 % en poids, dans un résidu de formule II, peuvent aussi être des groupes dans lesquels q = 2, et que les résidus R¹ et R² et les indices x et q, dans une molécule, peuvent varier à l'intérieur des définitions données.

2. Composition selon la revendication 1, dans laquelle le constituant a) est un éther polyglycidylique de bisphénols, de novolaques ou de diols aliphatiques.

3. Composition selon la revendication 1, ayant une viscosité inférieure à 50 000 mPa.s (mesurée à 25°C avec le viscosimètre Epprecht).

4. Composition selon la revendication 1, dans laquelle x est un nombre entier de 8 à 40.

5. Composition selon la revendication 1, dans laquelle q vaut 4.

6. Composition selon la revendication 1, dans laquelle tous les radicaux R² sont des groupes de formule 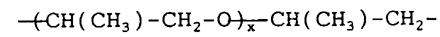 ou 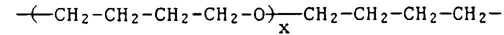 et x est un nombre entier de 10 à 30.

7. Composition selon la revendication 1, contenant de 1 à 50 % en poids, par rapport au mélange total, de diesters de formule I.

8. Procédé pour préparer des produits durcis, caractérisé en ce qu'on durcit d'une manière connue en soi une composition contenant les constituants a), b) et c) selon la revendication 1.

9. Procédé pour préparer un précondensat fusible mais encore durcissable, caractérisé en ce qu'on chauffe d'une manière connue en soi une composition selon la revendication 1.

10. Utilisation des diesters de formule I selon la revendication 1 en tant que flexibilisants pour résines époxydes.

11. Utilisation de la composition selon la revendication 1 en tant qu'adhésif ou pour préparer des matériaux composites, des stratifiés ou des revêtements.
